# EUROPEAN PATENT APPLICATION

(11) **EP 4 670 882 A1**
(43) Date of publication of application: **31.12.2025**
(21) Application number: 24185211.0
(22) Date of filing: 28.06.2024
(51) Int. Cl.: B23C 5/06, B23C 5/20, B23C 5/22

(54) **ROTARY CUTTING TOOL WITH DOUBLE-SIDED INDEXABLE CUTTING INSERT**

(71) Applicant: AB Sandvik Coromant, 811 81 Sandviken (SE)
(72) Inventor: KAKAI, Isak, 811 81 SANDVIKEN (SE)
(74) Representative: Sandvik

(57) **Abstract**

A rotary cutting tool comprising a tool body (2) with at least one insert seat (10), and a double-sided indexable cutting insert (30) with several working positions releasably mountable in said insert seat. A tangential support surface on a bottom wall (12) in the insert seat is divided into two or more tangential support sub surfaces (17a, 17b) that are substantially coplanar with each other and separated from each other by a groove (18), which extends across the bottom wall along a reference plane that is coplanar with a central plane of the cutting insert when mounted in the insert seat. The shortest distance between said reference plane and a tangential support sub surface (17a, 17b) on any side of said reference plane is equal to or larger than D/4, where D is the major diameter of the internally threaded part (21) of the screw hole (20) in the bottom wall (12) in said insert seat.

## Description

### FIELD OF THE INVENTION AND PRIOR ART

The present invention relates to a rotary cutting tool according to the preamble of claim 1.

A rotary cutting tool may be used for performing milling or drilling operations on a workpiece. A rotary cutting tool may be provided with several cutting inserts detachably mounted in a respective insert seat in a tool body of the rotary cutting tool. Each individual cutting insert may be provided with several identical sets of cutting edges, to thereby allow each cutting insert to be turned into different working positions. When a cutting edge of a set of cutting edges has been worn out, the cutting insert may be repositioned in its insert seat and mounted in a new working position with another set of cutting edges in an active cutting position.

As illustrated for instance in WO 2023/117168 A1 and EP 3 964 314 A1, a rotary cutting tool of the above-mentioned type may be provided with one or more insert seats arranged in the tool body at a transition between a front face and a peripheral surface of the tool body, wherein each one of these insert seats is open towards the front face of the tool body in order to allow a cutting insert mounted in the insert seat to project in the axial direction of the tool body beyond a front end thereof and also open towards the peripheral surface of the tool body in order to allow a cutting insert mounted in the insert seat to project in the radial direction of the tool body beyond the peripheral surface thereof. This type of insert seat may comprise a substantially tangentially facing bottom wall with a planar tangential support surface configured to abut against a tangential abutment surface on a major face of a cutting insert when the cutting insert is mounted in the insert seat, and an internal wall that extends transversely to the bottom wall and that at a first end adjoins to the front face of the tool body and at a second end adjoins to the peripheral surface of the tool body. A double-sided indexable cutting insert designed for mounting in such an insert seat is normally provided with a through hole that extends across the cutting insert between two opposite major faces thereof and that penetrates a substantially planar tangential abutment surface on each one of the two major faces, wherein the cutting insert is releasably fixed to the insert seat by means of a screw which is configured to extend through the through hole in the cutting insert and to be in threaded engagement with a screw hole provided in the tangential support surface in the insert seat.

Cutting inserts for use in a rotary cutting tool are normally produced by pressing and sintering. Inaccuracies in the shape of the press tool may contribute to unpredictable surface imperfections of the cutting inserts and the sintering will cause deviations from the desired shape of the cutting inserts. When a cutting insert of substantially rectangular basic shape with a through hole that extends across the cutting insert between two opposite major faces of the cutting insert is produced by pressing and sintering, there will be a more dense compacting of powder in some areas around the through hole in the cutting insert in connection with the pressing of the cutting insert as compared to other parts of the cutting insert, which may cause remaining small protuberances on the tangential abutment surface on each major side face after the pressing and sintering. Such remaining protuberances on the tangential abutment surfaces will prevent a perfectly flat contact between a tangential abutment surface on the cutting insert and the tangential support surface in the insert seat, which may cause some minor instability with respect to the support for the cutting insert in the insert seat.

The above-mentioned surface imperfections of the tangential abutment surfaces may on some cutting inserts be remedied by surface grinding after the pressing and sintering.

### OBJECT OF THE INVENTION

The object of the present invention is to provide a cutting tool of the above-mentioned type that has a new and favourable design.

### SUMMARY OF THE INVENTION

According to the invention, said object is achieved by means of a rotary cutting tool having the features defined in claim 1.

The rotary cutting tool according to the invention comprises:
- a tool body having a front end and an opposite rear end, the rear end being configured for attachment to a machine, wherein the tool body has an axially forwardly facing front face at its front end and a peripheral surface that adjoins to the front face and extends from the front face towards the rear end of the tool body, the tool body comprising at least one insert seat provided in the tool body at a transition between the front face and the peripheral surface of the tool body, wherein said at least one insert seat:
   - comprises a space configured to accommodate a double-sided indexable cutting insert, wherein this space is open towards the front face of the tool body in order to allow said cutting insert, when mounted in the insert seat, to project in the axial direction of the tool body beyond the front end thereof and also open towards the peripheral surface of the tool body in order to allow said cutting insert, when mounted in the insert seat, to project in the radial direction of the tool body beyond the peripheral surface thereof,
   - comprises a substantially tangentially facing bottom wall, and an internal wall that extends transversely to the bottom wall and delimits said space together with the bottom wall and that at a first end adjoins to the front face of the tool body and at a second end adjoins to the peripheral surface of the tool body;
- a double-sided indexable cutting insert with several different working positions releasably mountable in said at least one insert seat; and
- a fastening element in the form of a screw associated with said cutting insert and by means of which said cutting insert may be releasably fixed to said at least one insert seat in any of its working positions.

The above-mentioned cutting insert comprises:
- two major faces arranged opposite to each other on opposite sides of the cutting insert, the two major faces being configured to serve as rake faces, one at a time, and to constitute leading and trailing faces of the cutting insert when mounted in said at least one insert seat and as seen in an intended direction of rotation of the tool body, wherein the cutting insert has a through hole that extends centrally through the cutting insert between the two major faces and a median plane that extends halfway between the two major faces perpendicularly to a centre axis of the through hole, and wherein a peripheral surface extends around the cutting insert between the two major faces;
- two major side faces included in the peripheral surface and arranged opposite to each other on opposite sides of the cutting insert, wherein the cutting insert has a longitudinal plane that extends halfway between the two major side faces perpendicularly to the median plane and that contains the centre axis of the through hole;
- two minor side faces included in the peripheral surface and arranged opposite to each other on opposite sides of the cutting insert, each one of the two minor side faces being arranged between the two major side faces, wherein the cutting insert has a central plane that extends across the cutting insert perpendicularly to the median plane and perpendicularly to the longitudinal plane and that contains the centre axis of the through hole, and wherein a length of the cutting insert as measured along a line of intersection between the median plane and the longitudinal plane is larger than a width of the cutting insert as measured along a line of intersection between the median plane and the central plane; and
- four corner side faces included in the peripheral surface and arranged at a respective corner of the peripheral surface between a major side face and a minor side face,
wherein each one of the two major faces is provided with a substantially planar abutment surface that is penetrated by the through hole, and wherein the cutting insert, when mounted in said at least one insert seat in any of its working positions, is configured to abut against a radial support surface on the internal wall in the insert seat through a surface on one of the two major side faces, abut against an axial support surface on the internal wall in the insert seat through a surface on one of the two minor side faces and abut against a tangential support surface on the bottom wall in the insert seat through the abutment surface on one of the two major faces with the central plane of the cutting insert coplanar with an imaginary first reference plane that extends across the bottom wall in the insert seat and with the longitudinal plane of the cutting insert coplanar with an imaginary second reference plane that extends across the bottom wall in the insert seat perpendicularly to the first reference plane.

The above-mentioned fastening element is configured to extend through the through hole in said cutting insert and to be in threaded engagement with an internally threaded part of a screw hole in the bottom wall in said at least one insert seat.

According to the invention, the tangential support surface on the bottom wall of said at least one insert seat is divided into two or more tangential support sub surfaces that are substantially coplanar with each other and located at a distance from each other, wherein:
- said two or more tangential support sub surfaces consist of one or more tangential support sub surfaces located on a first side of said first reference plane and one or more tangential support sub surfaces located on an opposite second side of said first reference plane,
- said one or more tangential support sub surfaces on the first side of said first reference plane are separated from said one or more tangential support sub surfaces on the second side of said first reference plane by a groove that is formed in the bottom wall and extends across the bottom wall along said first reference plane, this groove being recessed in relation to the tangential support sub surfaces on the bottom wall to prevent the abutment surface of said cutting insert that abuts against the tangential support sub surfaces, when the cutting insert is mounted in said at least one insert seat in any of its working positions, from making contact with the part of the bottom wall covered by the groove, and
- said groove has such width that the shortest distance between said first reference plane and a tangential support sub surface on any side of the first reference plane is equal to or larger than D/4, where D is the major diameter of the internally threaded part of the screw hole in the bottom wall in said at least one insert seat.

The fact that said groove is recessed in relation to the tangential support sub surfaces on the bottom wall implies that the surfaces of the groove are located at a lower level in the bottom wall compared to the tangential support sub surfaces, i.e. below the plane in which the tangential support sub surfaces extend.

It has been observed that, in a double-sided indexable cutting insert of the above-mentioned type, the densest compacting of powder in connection with the pressing of the cutting insert will occur in the areas of the cutting insert where the distance between the through hole and the peripheral surface of the cutting insert is at its shortest. Thus, when the width of the cutting insert in the central plane is smaller than the length of the cutting insert in the longitudinal plane, the densest compacting of powder in connection with the pressing of the cutting insert will occur in the areas along the central plane on either side of the through hole, which in its turn implies that there, after the sintering of the cutting insert, will remain elongated ridge-like protuberances of very small height (for instance in the order of 0.02-0.03 mm) on each one of the above-mentioned abutment surfaces on either side of the through hole substantially along the central plane, wherein the abutment surface on each one of the first and second major faces has a first such ridge-like protuberance extending on the abutment surface from the rim of the through hole toward the first major side face in a direction substantially along the central plane and a second such ridge-like protuberance extending on the abutment surface from the rim of the through hole toward the second major side face in a direction substantially along the central plane. When the cutting insert is mounted in the insert seat with the abutment surface on one of the major faces of the cutting insert abutting against the tangential support sub surfaces on the bottom wall in the insert seat, at least the major parts of the above-mentioned ridge-like protuberances on the abutment surface will be received in the groove between the tangential support sub surfaces and thereby prevented from being in contact with the tangential support sub surfaces, which makes it possible to obtain a flatter contact between the cutting insert and the tangential support surface in the insert seat and thereby avoid, or at least to a considerable extent reduce, the above-mentioned instability problem. Thus, the arrangement of the groove in the bottom wall of the insert seat makes it possible to dispense with a grinding of the abutment surfaces on the major faces of the cutting insert for removal of said ridge-like protuberances, which will reduce the cost for the production of the cutting insert.

When the cutting insert is mounted to said at least one insert seat in a position with the first major face serving as leading face of the cutting insert and the second major face serving as trailing face of the cutting insert, one or more surfaces on the first major face will serve as rake surfaces of the cutting insert and the abutment surface on the opposite second major face will serve as tangential abutment surface of the cutting insert. When the cutting insert is mounted to the insert seat in a position with the second major face serving as leading face of the cutting insert and the first major face serving as trailing face of the cutting insert, one or more surfaces on the second major face will serve as rake surfaces of the cutting insert and the abutment surface on the opposite first major face will serve as tangential abutment surface of the cutting insert. In a double-sided indexable cutting insert of the type here in question, said abutment surfaces on the opposite major faces of the cutting insert are substantially parallel with each other, i.e. parallel with each other within manufacturing tolerances.

A double-sided indexable cutting insert of the type here in question preferably has one or two different working positions on each one of the two opposite major faces of the cutting insert, which implies that such a cutting insert has one or two sets of cutting edges located along the periphery of the first major face and one or two other sets of cutting edges located along the periphery of the opposite second major face. When the cutting insert has one set of cutting edges located along the periphery of the first major face and one other set of cutting edges located along the periphery of the second major face, the cutting insert may be used in two different working positions, one on each major face, when mounted in an insert seat. When the cutting insert has two sets of cutting edges located along the periphery of the first major face and two other sets of cutting edges located along the periphery of the second major face, the cutting insert may be used in four different working positions, two on each major face, when mounted in an insert seat.

The width of said groove is with advantage no larger than 1.8×D, preferably no larger than 1.5×D, in any position along the longitudinal extension of the groove. Furthermore the width of said groove is with advantage substantially constant along the longitudinal extension of the groove.

According to an embodiment of the invention, said groove has substantially rectilinear longitudinal edges on either side of said first reference plane.

According to another embodiment of the invention, said groove has a depth of 0.03-2.0 mm, preferably 0.03-1.0 mm, more preferably 0.03-0.5 mm, and most preferably 0.03-0.2 mm. The depth of the groove here refers to the perpendicular distance between the deepest part of the groove and the plane in which the tangential support sub surfaces extend.

As mentioned above, after the sintering of the cutting insert, there will remain elongated ridge-like protuberances of a small height on each one of the above-mentioned abutment surfaces. The height of the ridge-like protuberances depends on the grade of the cutting insert, i.e. on which carbide powder the cutting insert is made of, since different carbide powders behave in different ways in connection with pressing and sintering. The height of the ridge-like protuberances is for instance in the order of 0.02-0.03 mm for the most common grades for steel machining. When said groove has a depth of at least 0.03 mm, the cutting insert can be made of the most common carbide powders. During use of the rotary cutting tool, particles and fluids may penetrate from the surroundings into the gap between the cutting insert and the groove in the insert seat and subject the insert seat and the screw hole in the insert seat to contamination. In order to decrease such contamination, it is favourable to reduce the depth of the groove as much as possible, while taking due account of the height of the ridge-like protuberances on the abutment surfaces of the cutting insert. When the depth of the groove is 0.5 mm or lower, the contamination of the seat and the screw hole is decreased. When the depth of the groove is 0.2 mm or lower, the contamination of the seat and the screw hole is almost negligible.

Another embodiment of the invention is characterized in:
- that the bottom wall comprises a first wall section and a second wall section that are recessed in relation to the tangential support sub surfaces on the bottom wall, wherein said first wall section extends across the bottom wall at a first end of the bottom wall facing the front face of the tool body and said second wall section extends across the bottom wall at an opposite second end of the bottom wall;
- that each one of said one or more tangential support sub surfaces on the first side of said first reference plane adjoins to said first wall section; and
- that each one of said one or more tangential support sub surfaces on the second side of said first reference plane adjoins to said second wall section.

The fact that said first and second wall sections are recessed in relation to the tangential support sub surfaces on the bottom wall implies that they are located at a lower level in the bottom wall compared to the tangential support sub surfaces, i.e. below the plane in which the tangential support sub surfaces extend.

Another embodiment of the invention is characterized in:
- that said two or more tangential support sub surfaces comprise two tangential support sub surfaces located on the first side of said first reference plane and on either side of said second reference plane such that one of them is located on a first side of the second reference plane and the other one is located on an opposite second side of the second reference plane;
- that said two or more tangential support sub surfaces comprise two tangential support sub surfaces located on the second side of said first reference plane and on either side of said second reference plane such that one of them is located on the first side of the second reference plane and the other one is located on the second side of the second reference plane; and
- that an additional groove is formed in the bottom wall and extends across the bottom wall along said second reference plane, this additional groove being recessed in relation to the tangential support sub surfaces on the bottom wall to prevent the abutment surface of said cutting insert that abuts against the tangential support sub surfaces, when the cutting insert is mounted in said at least one insert seat in any of its working positions, from making contact with the part of the bottom wall covered by the additional groove, wherein said two tangential support sub surfaces on the first side of the first reference plane are separated from each other by the additional groove and said two tangential support sub surfaces on the second side of the first reference plane are separated from each other by the additional groove.

The fact that said additional groove is recessed in relation to the tangential support sub surfaces on the bottom wall implies that the surfaces of the additional groove are located at a lower level in the bottom wall compared to the tangential support sub surfaces, i.e. below the plane in which the tangential support sub surfaces extend.

Said additional groove preferably has such width that the shortest distance between said second reference plane and a tangential support sub surface on any side of the second reference plane is equal to or larger than D/4. The width of the additional groove is preferably smaller than the width of the above-mentioned groove that extends across the bottom wall along said first reference plane.

The width of said additional groove is with advantage no larger than 1.8×D, preferably no larger than 1.5×D, in any position along the longitudinal extension of the additional groove. Furthermore the width of said additional groove is with advantage substantially constant along the longitudinal extension of the additional groove.

According to another embodiment of the invention, said additional groove has substantially rectilinear longitudinal edges on either side of said second reference plane.

According to another embodiment of the invention, the radial support surface on the internal wall of said at least one insert seat is divided into a first radial support sub surface and a second radial support sub surface located at a distance from each other as seen in the axial direction of the tool body. By dividing the radial support surface into two separate and mutually spaced apart sub surfaces, it will be possible to ensure a radial support for the cutting insert at two distinct and mutually separated areas on the major side face of the cutting insert that faces the radial support surface in the insert seat, which is particularly favourable when the major side faces have considerable surface imperfections. However, the radial support surface on the internal wall of said at least one insert seat may as an alternative be formed as a continuous surface.

According to another embodiment of the invention, said first and second radial support sub surfaces are substantially coplanar with each other.

According to another embodiment of the invention, the length of said cutting insert as measured along the line of intersection between the median plane and the longitudinal plane is at least 1.1 times larger than the width of the cutting insert as measured along the line of intersection between the median plane and the central plane.

According to another embodiment of the invention, the abutment surface on each one of the two major faces of said cutting insert is depressed in relation to at least a part of a periphery of the associated major face, wherein this part of the periphery of the major face preferably comprises at least one cutting edge. Thus, the abutment surface on each one of the major faces is located closer to the median plane than said part of the periphery of the associated major face. With the solution according to the invention, it will be possible to dispense with a tricky grinding of such depressed abutment surfaces on the major faces of the cutting insert.

The tool body preferably comprises two or more insert seats of the type described above distributed in the circumferential direction of the tool body.

A rotary cutting tool according to the present invention is particularly intended to be designed as a milling tool, for instance in the form of a high-feed milling tool.

Further advantageous features of the rotary cutting tool according to the present invention will appear from the description following below.

### BRIEF DESCRIPTION OF THE DRAWINGS

With reference to the appended drawings, a specific description of embodiments of the invention cited as examples follows below. In the drawings:
- Fig 1: is a perspective view of a rotary cutting tool according to a first embodiment of the invention, as seen with a cutting insert removed from its insert seat in the tool body of the cutting tool,
- Fig 2: is a lateral view of the rotary cutting tool of Fig 1,
- Fig 3: is a front view of the rotary cutting tool of Fig 1,
- Fig 4: is a perspective view of the rotary cutting tool of Fig 1,
- Fig 5: is a cut through a part of the rotary cutting tool according to the line V-V in Fig 4,
- Fig 6: is a partly cut perspective view of a part of the rotary cutting tool of Fig 1, illustrating a cutting insert mounted in an insert seat formed in the tool body of the rotary cutting tool,
- Fig 7: is a partly cut perspective view corresponding to Fig 6, but with the cutting insert removed from the insert seat,
- Fig 8: is a partly cut perspective view corresponding to Fig 6,
- Fig 9a: is a cut according to the line IXa-IXa in Fig 8,
- Fig 9b: is a cut according to the line IXb-IXb in Fig 8,
- Fig 9c: is a cut according to the line IXc-IXc in Fig 8,
- Fig 10: is a partly cut perspective view corresponding to Fig 7,
- Fig 11a: is a cut according to the line Xla-Xla in Fig 10,
- Fig 11b: is a cut according to the line Xlb-Xlb in Fig 10,
- Figs 12a and 12b: are perspective views from different directions of a double-sided indexable cutting insert included in the cutting tool of Fig 1,
- Fig 12c: is a plan view from a first side of the cutting insert of Figs 12a and 12b,
- Fig 12d: is a plan view from an opposite second side of the cutting insert of Figs 12a and 12b,
- Fig 12e: is a lateral view from a first minor side of the cutting insert of Figs 12a and 12b,
- Fig 12f: is a lateral view from an opposite second minor side of the cutting insert of Figs 12a and 12b,
- Fig 12g: is a lateral view from a first major side of the cutting insert of Figs 12a and 12b,
- Fig 12h: is a lateral view from an opposite second major side of the cutting insert of Figs 12a and 12b,
- Fig 12i: is a cut according to the line Xlli-Xlli in Fig 12c,
- Fig 12j: is a cut according to the line Xllj-Xllj in Fig 12c, and
- Fig 13: is an illustration of a rotary cutting tool according to a second embodiment of the invention, as seen in a partly cut perspective view corresponding to Fig 7.

### DETAILED DESCRIPTION OF EMBODIMENTS OF THE INVENTION

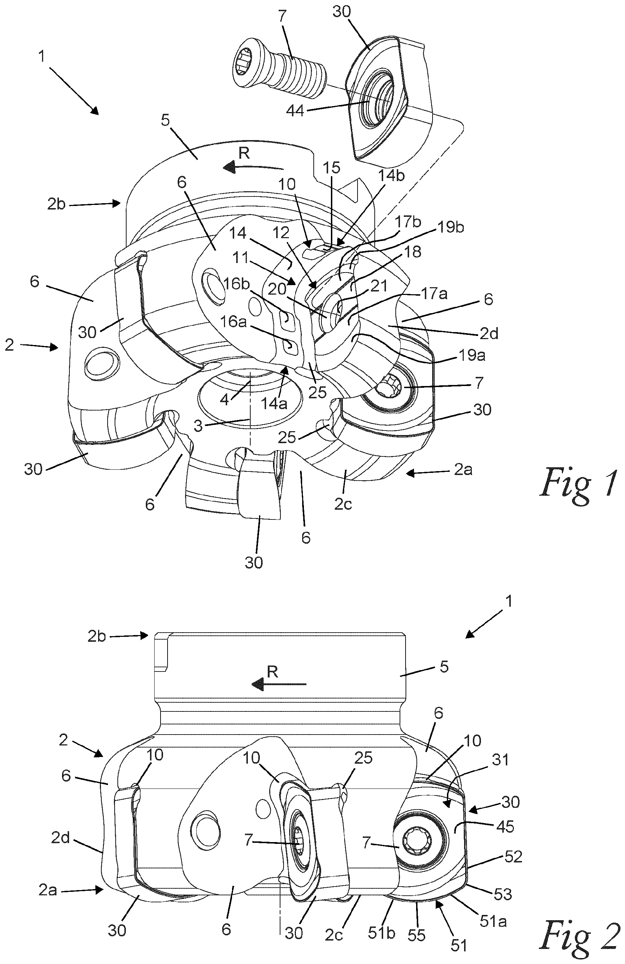

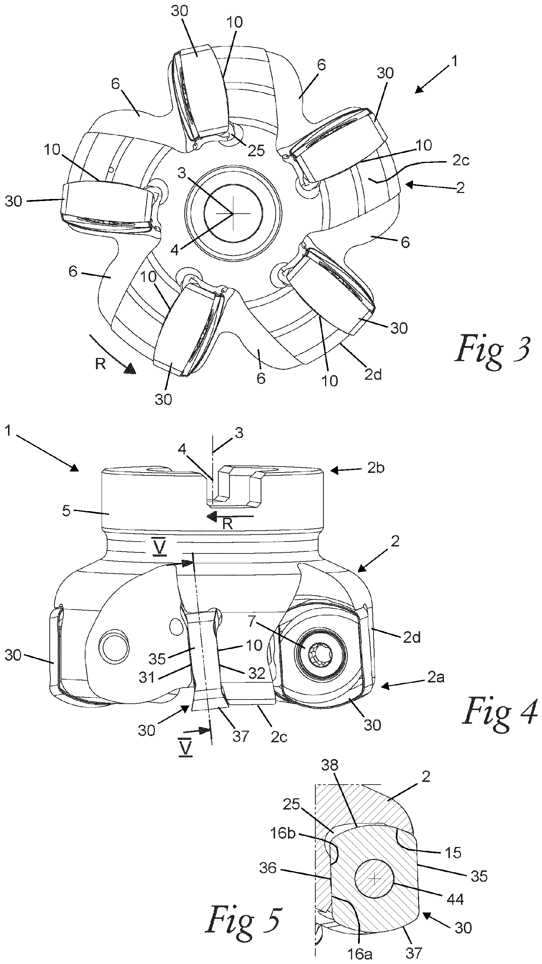

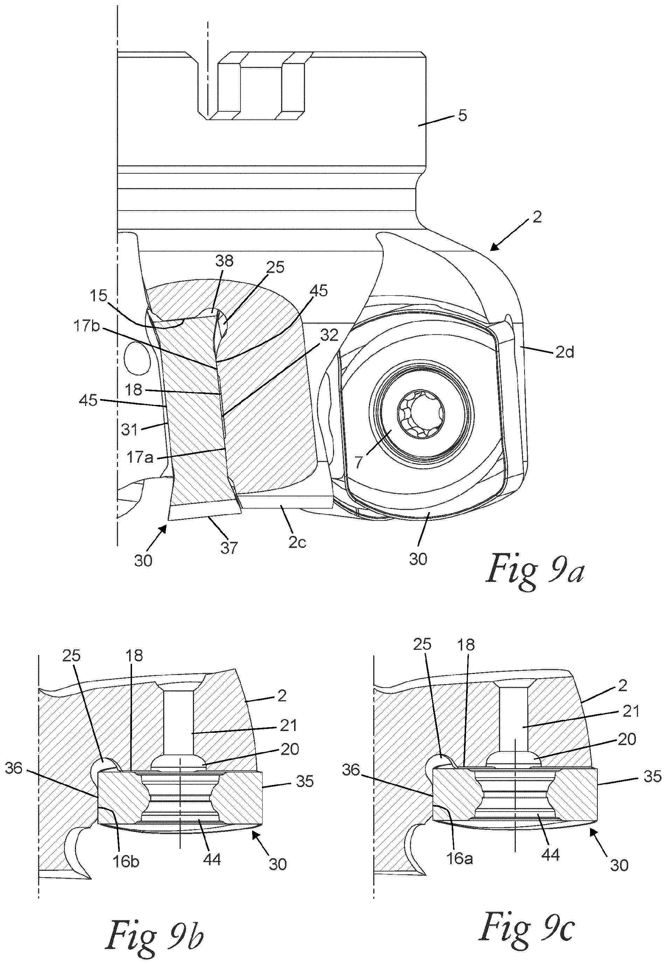

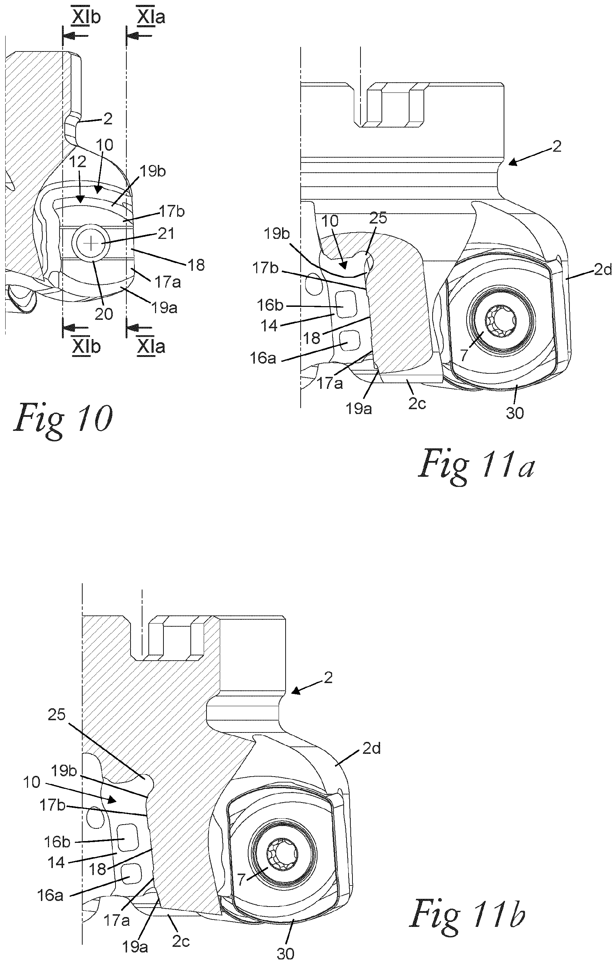

A rotary cutting tool 1 according to an embodiment of the present invention is illustrated in Figs 1-11. The rotary cutting tool 1 illustrated in Figs 1-11 has the design of a milling tool in the form of a high-feed milling tool. However, the rotary cutting tool of the present invention may as an alternative have the design of any other suitable type of milling tool. The rotary cutting tool of the present invention may also have the design of a drilling tool, for instance in the form of an indexable insert drill of the type illustrated in WO 2023/117168 A1.

The rotary cutting tool 1 comprises a tool body 2 and is configured to be rotated about an axis of rotation 3. The tool body 2 has a front end 2a and an opposite rear end 2b. A longitudinal centre axis 4 of the tool body 2 extends between the rear end 2b and the front end 2a of the tool body, wherein this centre axis 4 coincides with the axis of rotation 3 of the rotary cutting tool 1. A rear part of the tool body 2 forms a connection member 5, through which the tool body 2 is mountable, directly or via an intermediate tool holder, to a rotating spindle or the similar of a machine, for instance a milling machine. At the front end 2a, the tool body 2 is provided with an axially forwardly facing front face 2c. The tool body 2 also has a peripheral surface 2d that adjoins to the front face 2c and extends from the front face 2c towards the rear end 2b of the tool body.

In the illustrated embodiment, the tool body 2 is provided with several insert seats 10 which are evenly or at least substantially evenly distributed in the circumferential direction of the tool body 2 and configured to receive a respective double-sided indexable cutting insert 30. Thus, the insert seats 10 and also the cutting inserts 30, are evenly or at least substantially evenly distributed about the centre axis 4 of the tool body 2. Each cutting insert 30 is configured to be detachably mounted in its associated insert seat 10. A chip pocket 6 is provided in the tool body 2 in front of each insert seat 10 as seen in the intended direction of rotation R of the tool body 2.

The cutting inserts 30 are made of hard and wear-resistant material, preferably cemented carbide, and the tool body 2 is preferably made of steel.

In the embodiment illustrated in Figs 1-11, the tool body 2 is provided with five insert seats 10 spaced apart in the circumferential direction of the tool body. However, the tool body 2 may as an alternative, inter alia depending on the diameter of the tool body, be provided with any other suitable number of insert seats 10. Each insert seat 10 is located at a transition between the front face 2c and the peripheral surface 2d of the tool body 2. Each insert seat 10 comprises a space 11 configured to accommodate a double-sided indexable cutting insert 30, wherein this space 11 is open towards the front face 2c of the tool body 2 in order to allow a cutting insert 30 mounted in the insert seat 10 to project in the axial direction of the tool body 2 beyond the front end 2a thereof and also open towards the peripheral surface 2d of the tool body 2 in order to allow a cutting insert 30 mounted in the insert seat 10 to project in the radial direction of the tool body 2 beyond the peripheral surface 2d thereof.

Each insert seat 10 comprises a substantially tangentially facing bottom wall 12, a substantially tangentially facing top opening opposite to the bottom wall 12 and an internal wall 14 provided between the bottom wall 12 and the top opening. The top opening is facing the chip pocket 6 provided in front of the insert seat 10. The internal wall 14 extends transversely to the bottom surface 12 and delimits the cutting insert accommodating space 11 together with the bottom wall 12. The internal wall 14 has a first end 14a, through which the internal wall 14 adjoins to the front face 2c of the tool body 2, and a second end 14b, through which the internal wall 14 adjoins to the peripheral surface 2d of the tool body 2. The insert seat 10 is configured to receive a cutting insert 30 with a substantially quadrangular basic shape. The internal wall 14 is provided with an axial support surface 15 configured to abut against a surface on a minor side face 37, 38 of a cutting insert 30 and a radial support surface 16a, 16b configured to abut against a surface on a major side face 35, 36 of the cutting insert 30.

In the illustrated embodiment, the axial support surface 15 has a concave shape adapted to the convex shape of the minor side faces 37, 38 of the associated cutting insert 30. However, the axial support surface may as an alternative have any other suitable shape depending on the shape of the minor side faces 37, 38 of the associated cutting insert 30.

In the illustrated embodiment, the radial support surface 16a, 16b of each insert seat 10 is divided into a first radial support sub surface 16a and a second radial support sub surface 16b located at a distance from each other as seen in the axial direction of the tool body 2. However, the radial support surface of each insert seat 10 may as an alternative be formed as a continuous surface. When the radial support surface is formed as a continuous surface, it may be planar. However, when formed as a continuous surface, the radial support surface may as an alternative have a concave shape or any other suitable shape. Said first and second radial support sub surfaces 16a, 16b may be coplanar, or at least substantially coplanar with each other or arranged at an angle to each other.

The bottom wall 12 is provided with a tangential support surface 17a, 17b configured to abut against a substantially planar abutment surface 45 on a major face 31, 32 of a cutting insert 30. The tangential support surface on the bottom wall 12 is divided into two or more tangential support sub surfaces 17a, 17b that are coplanar, or at least substantially coplanar, with each other and located at a distance from each other. The specific positioning of the tangential support sub surfaces 17a, 17b will be described in closer detail further below.

In the illustrated embodiment, each insert seat 10 comprises a stress relief groove 25 that forms a transition between the bottom wall 12 and the internal wall 14 of the insert seat 10 and that at a first end ends in the front face 2c of the tool body 2 and at a second end ends in the peripheral surface 2d of the tool body.

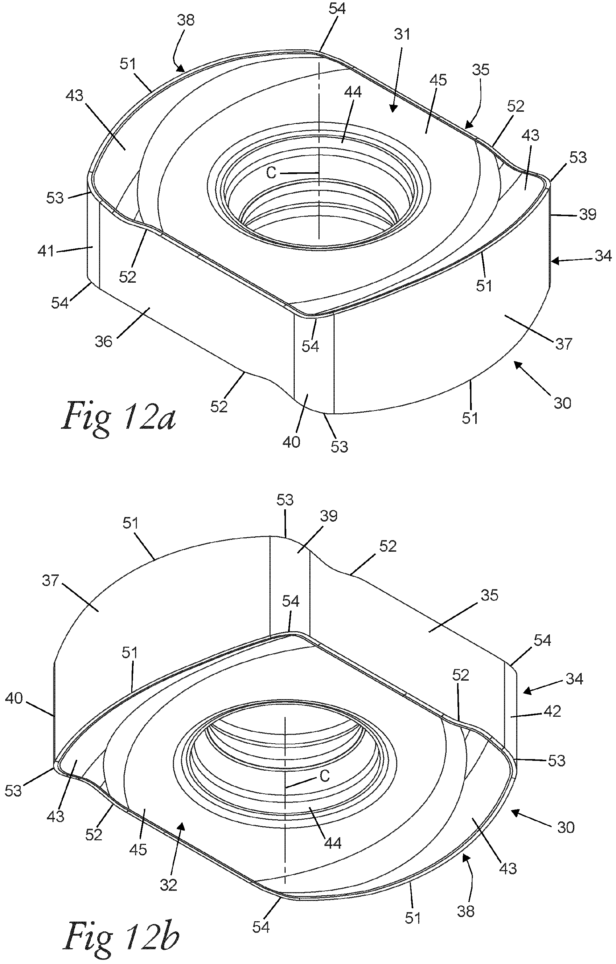

The cutting inserts 30 included in the illustrated rotary cutting tool 1 are all geometrically identical to each other, within manufacturing tolerances. Thus, the cutting inserts 30 have the same shape. The cutting inserts 30 illustrated in Figs 1-11 are of the type illustrated in closer detail in Figs 12a-12j but may also be designed in any other suitable manner.

Each cutting insert 30 is a double-sided indexable cutting insert and is detachably mountable in at least two, preferably four, different working positions in the associated insert seat 10. Each cutting insert 30 comprises a first major face 31 and a second major face 32 arranged opposite to each other on opposite sides of the cutting insert. The two major faces 31, 32 are configured to serve as rake faces, one at a time, and are configured to constitute leading and trailing faces of the cutting insert 30 when the cutting insert is mounted to the tool body 2 and as seen in the intended direction of rotation R of the tool body. Thus, the cutting insert 30 is configured to be mounted in an insert seat 10 of the tool body 2 with one of the two major faces 31, 32 facing forward in the intended direction of rotation R of the tool body and serving as rake face and the other major face facing rearward in the intended direction of rotation R of the tool body.

A peripheral surface 34 extends around the cutting insert 30 between the two major faces 31, 32. The peripheral surface 34 comprises:
- a first major side face 35 and a second major side face 36 arranged opposite to each other on opposite sides of the cutting insert 30;
- a first minor side face 37 and a second minor side face 38 arranged between the two major side faces 35, 36, wherein the first and second minor side faces 37, 38 are arranged opposite to each other on opposite sides of the cutting insert 30;
- a first corner side face 39 arranged at a first corner of the peripheral surface 34 between the first major side face 35 and the first minor side face 37;
- a second corner side face 40 arranged at a second corner of the peripheral surface 34 between the first minor side face 37 and the second major side face 36;
- a third corner side face 41 arranged at a third corner of the peripheral surface 34 between the second major side face 36 and the second minor side face 38; and
- a fourth corner side face 42 arranged at a fourth corner of the peripheral surface 34 between the second minor side face 38 and the first major side face 35.

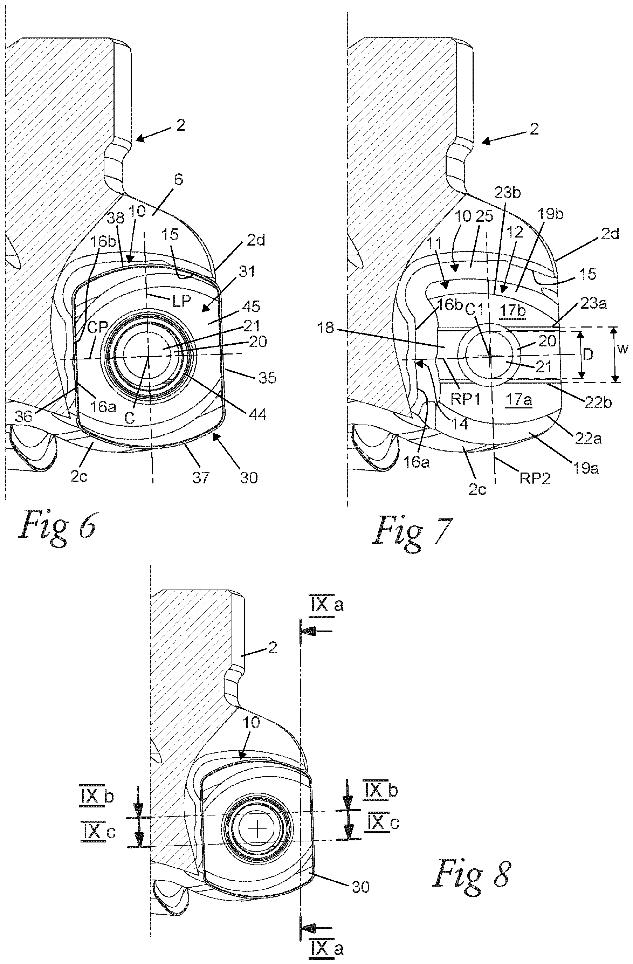

A through hole 44 extends centrally through the cutting insert 30 between the two major faces 31, 32. The through hole 44 is configured to receive a fastening element 7 in the form of a screw, by means of which the cutting insert 30 may be releasably fixed in an insert seat 10 of the tool body 2 in any of its working positions. The fastening element 7 is configured to extend through the through hole 44 in the cutting insert 30 and to be in threaded engagement with an internally threaded part 21 of a screw hole 20 provided in the bottom wall 12 in the insert seat 10. The fastening elements 7 have been omitted in Figs 6, 8, 9b and 9c.

Each one of the two major faces 31, 32 is provided with a substantially planar abutment surface 45 that is centrally positioned on the associated major face 31, 32 and penetrated by the through hole 44. The abutment surfaces 45 are configured to serve as tangential abutment surfaces of the cutting insert 30 in different working positions of the cutting insert. The abutment surfaces 45 on the two major faces 31, 32 are substantially parallel with each other.

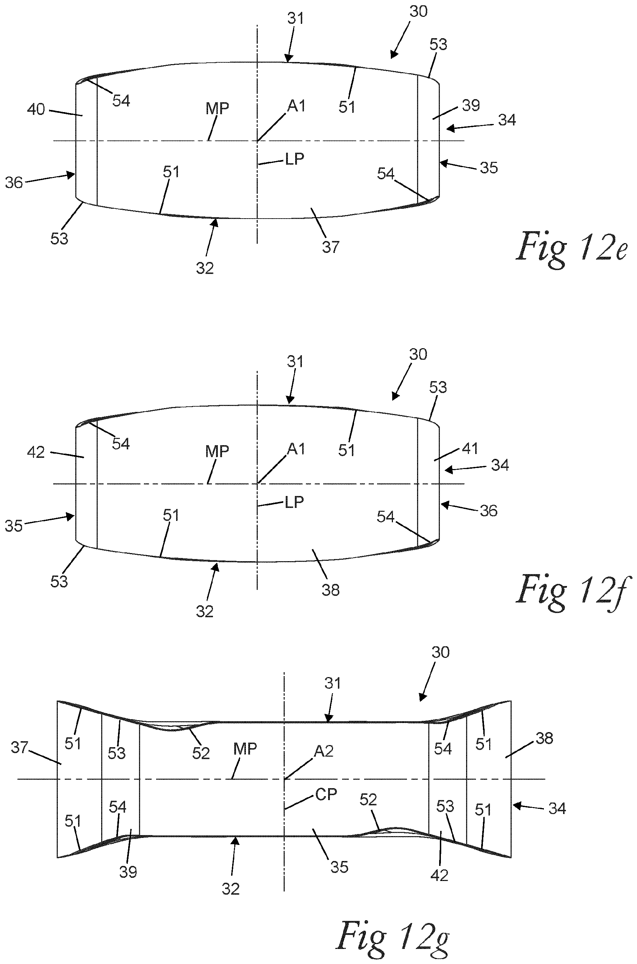

A median plane MP (see Figs 12e-12j), which constitutes an imaginary plane, extends halfway between the two major faces 31, 32 in parallel with said abutment surfaces 45 and perpendicularly to a centre axis C of the through hole 44. The median plane MP intersects the first and second major side faces 35, 36, the first and second minor side faces 37, 38 and the four corner side faces 39-42.

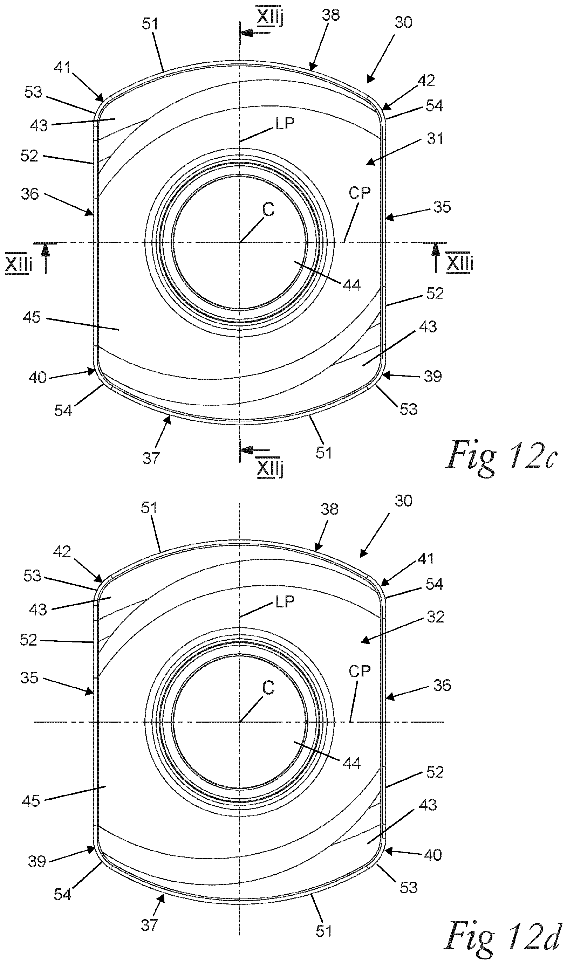

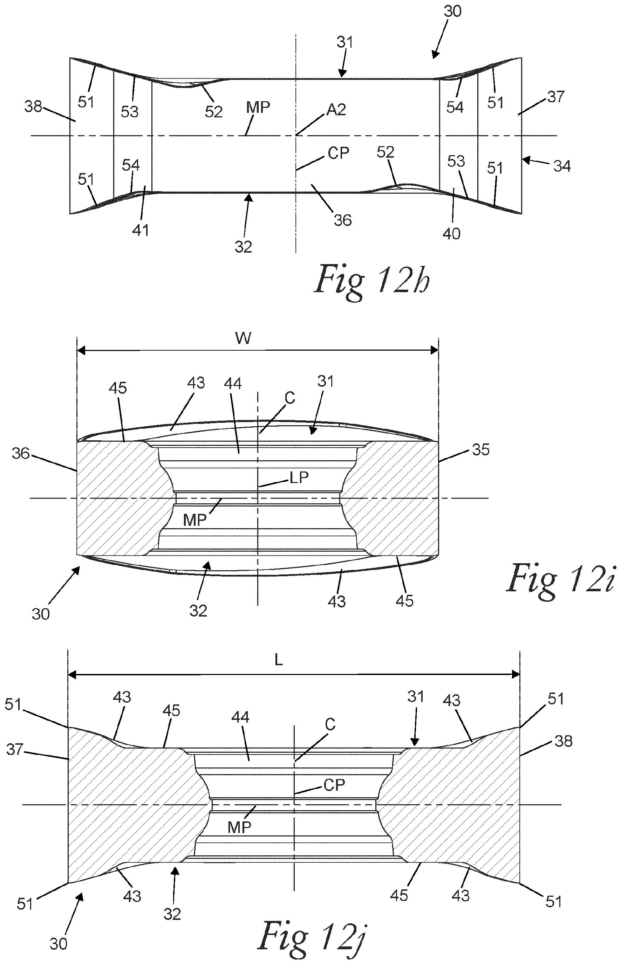

A longitudinal plane LP (see Figs 12c-12f and 12i), which constitutes an imaginary plane, extends halfway between the two major side faces 35, 36, wherein this longitudinal plane LP contains the centre axis C of the through hole 44 and extends perpendicularly to the median plane MP. The longitudinal plane LP intersects the first and second minor side faces 37, 38.

A central plane CP (see Figs 12c, 12d, 12g, 12h and 12j), which constitutes an imaginary plane, extends halfway between the two minor side faces 37, 38 perpendicularly to the median plane MP and perpendicularly to the longitudinal plane LP, wherein this central plane CP contains the centre axis C of the through hole 44. The central plane CP intersects the first and second major side faces 35, 36.

The length L (see Fig 12j) of the cutting insert 30, as measured along a line of intersection between the median plane MP and the longitudinal plane LP is larger, preferably at least 1.1 times larger, than the width W (see Fig 12i) of the cutting insert 30, as measured along a line of intersection between the median plane MP and the central plane CP. Said length L is preferably between 1.1 and 1.4 times larger than said width W. In the illustrated embodiment, the length L of the cutting insert 30 is approximately 1.25 times larger than the width W of the cutting insert 30.

In the illustrated embodiment, each one of the first and second minor side faces 37, 38 is convexly curved as seen in a plan view of the cutting insert 30 and as seen in cross-sectional planes through the cutting insert 1 perpendicularly to the centre axis C of the through hole 44. In the illustrated embodiment, the two minor side faces 37, 38 have 180° rotational symmetry with each other with respect to the centre axis C of the through hole 44. Each one of the two minor side faces 37, 38 also has 180° rotational symmetry about an imaginary first reference axis A1 (see Figs 12e and 12f) that extends along a line of intersection between the median plane MP and the longitudinal plane LP.

In the illustrated embodiment, each one of the first and second major side faces 35, 36 is planar, or at least substantially planar, and parallel to the longitudinal plane LP. In the illustrated embodiment, the two major side faces 35, 36 have 180° rotational symmetry with each other with respect to the centre axis C of the through hole 44. Each one of the two major side faces 35, 36 also has 180° rotational symmetry about an imaginary second reference axis A2 (see Figs 12g and 12h) that extends along a line of intersection between the median plane MP and the central plane CP.

In the illustrated embodiment, the first and second major faces 31, 32 have 180° rotational symmetry with each other with respect to said first reference axis A1 and also with respect to said second reference axis A2. Each one of the two major faces 31, 32 also has 180° rotational symmetry about the centre axis C of the through hole 44.

In the illustrated embodiment, the peripheral surface 34 extends between the first and second major faces 31, 32 perpendicularly to the median plane MP, which implies that the peripheral surface 34 is perpendicular to any plane that is parallel to the median plane MP and intersects the peripheral surface 34. Thus, in this case, each one of the above-mentioned side faces 35-42 extends between the first and second major faces 31, 32 perpendicularly to the median plane MP.

Cutting edges are formed along the periphery of each one of the first and the second major faces 31, 32. A first group of cutting edges are distributed along the periphery of the first major face 31 and formed at the intersection between the first major face 31 and the peripheral surface 34. A second group of cutting edges are distributed along the periphery of the second major face 32 and formed at the intersection between the second major face 32 and the peripheral surface 34.

When mounted in one of the insert seats 10 in any of its working positions, the cutting insert 30 is configured to:
- abut against the radial support surface 16a, 16b on the internal wall 14 in the insert seat 10 through a surface on one of the two major side faces 35, 36 of the cutting insert,
- abut against the axial support surface 15 on the internal wall 14 in the insert seat 10 through a surface on one of the two minor side faces 37, 38 of the cutting insert, and
- abut against the tangential support sub surfaces 17a, 17b on the bottom wall 12 in the insert seat 10 through the abutment surface 45 on one of the two major faces 31, 32 with the central plane CP of the cutting insert 30 coplanar with an imaginary first reference plane RP1 (see Fig 7) that extends across the bottom wall 12 in the insert seat 10 and with the longitudinal plane LP of the cutting insert 30 coplanar with an imaginary second reference plane RP2 that extends across the bottom wall 12 in the insert seat 10 perpendicularly to the first reference plane RP1.

In a conventional manner, the centre axis C of the through hole 44 in the cutting insert 30 is slightly offset from a centre axis C1 of the threaded part 21 of the screw hole 20 in the bottom wall 12 of the insert seat 10 when the cutting insert 30 is mounted in the insert seat 10 in any of its working positions.

In the illustrated embodiment, each insert seat 10 is so designed that the cutting insert 30 is given a negative axial tipping-in angle and a negative radial tipping-in angle when mounted in the insert seat 10 in any of its working positions.

As mentioned above, the tangential support surface on the bottom wall 12 of each insert seat 10 is divided into two or more tangential support sub surfaces 17a, 17b that are coplanar, or at least substantially coplanar, with each other and located at a distance from each other. These tangential support sub surfaces consist of one or more tangential support sub surfaces 17a located on a first side of the above-mentioned first reference plane RP1 and one or more tangential support sub surfaces 17b located on an opposite second side of the first reference plane RP1. Said one or more tangential support sub surface 17a on the first side of the first reference plane RP1 are separated from said one or more tangential support sub surfaces 17b on the second side of the first reference plane RP1 by a groove 18 that is formed in the bottom wall 12 and extends across the bottom wall 12 along the first reference plane RP1. The groove 18 intersects the screw hole 20 in the bottom wall 12 of the insert seat 10. The groove 18 extends in a substantially radial direction in the tool body 2 and is recessed in relation to the tangential support sub surfaces 17a, 17b on the bottom wall 12 to prevent the abutment surface 45 of the cutting insert 30 that abuts against the tangential support sub surfaces 17a, 17b, when the cutting insert 30 is mounted in the insert seat 10 in any of its working positions, from making contact with the part of the bottom wall 12 covered by the groove 18. Hereby, an area on said abutment surface 45 along the central plane CP will not be in contact with the tangential support sub surfaces 17a, 17b when the cutting insert 30 has been mounted in the insert seat 10 in any of its working positions. The groove 18 has such width w that the shortest distance between the first reference plane RP1 and a tangential support sub surface 17a, 17b on any side of the first reference plane RP1 is equal to or larger than D/4, where D is the major diameter of the internally threaded part 21 of the screw hole 20 in the bottom wall 12 of the insert seat 10.

The width w of the groove 18 is preferably no larger than 1.8×D, more preferably no larger than 1.5×D, in any position along the longitudinal extension of the groove 18. Furthermore, the width w of the groove 18 is preferably substantially constant along the longitudinal extension of the groove 18. However, the groove 18 may as an alternative have a width w that varies along the longitudinal extension of the groove 18.

The groove 18 has a depth of 0.03-2.0 mm, preferably 0.03-1.0 mm, more preferably 0.03-0.5 mm, and most preferably 0.03-0.2 mm, wherein the depth of the groove 18 is measured as the perpendicular distance between the deepest part of the groove 18 and the plane in which the tangential support sub surfaces 17a, 17b extend.

In the embodiment illustrated in Figs 1-11, the tangential support sub surfaces 17a, 17b of each insert seat 10 are two in number and consist of a first tangential support sub surface 17a located on a first side of the groove 18 and a second tangential support sub surface 17b located on an opposite second side of the groove 18. The first tangential support sub surface 17a is located axially forwardly of the groove 18 and the second tangential support sub surface 17b is located axially rearwardly of the groove 18, as seen in the axial direction of the tool body 2. The first tangential support sub surface 17a has a rear edge 22b, through which the first tangential support sub surface 17a adjoins to the groove 18, and an opposite front edge 22a. The second tangential support sub surface 17b has a front edge 23a, through which the second tangential support sub surface 17b adjoins to the groove 18, and an opposite rear edge 23b. The perpendicular distance between the rear edge 22b of the first tangential support sub surface 17a and the first reference plane RP1 is at least D/4 in any point along this rear edge 22b, and the perpendicular distance between the front edge 23a of the second tangential support sub surface 17b and the first reference plane RP1 is at least D/4 in any point along this front edge 23a.

In the illustrated embodiment, the groove 18 extends from the stress relief groove 25 to the peripheral surface 2d of the tool body 2.

In the embodiment illustrated in Figs 1-11, the rear edge 22b of the first tangential support sub surface 17a and the front edge 23a of the second tangential support sub surface 17b are substantially rectilinear. Thus, in this case, the groove 18 has substantially rectilinear longitudinal edges on either side of the first reference plane RP1. However, the rear edge 22b of the first tangential support sub surface 17a and the front edge 23a of the second tangential support sub surface 17b may as an alternative be curved, wherein the groove 18 consequently has curved longitudinal edges on either side of the first reference plane RP1.

In the embodiment illustrated in Figs 1-11, the bottom wall 12 of each insert seat 10 comprises a first wall section 19a and a second wall section 19b that are recessed in relation to the tangential support sub surfaces 17a, 17b on the bottom wall 12, wherein the first wall section 19a extends across the bottom wall 12 at a first end of the bottom wall facing the front face 2c of the tool body 2 and the second wall section 19b extends across the bottom wall 12 at an opposite second end of the bottom wall. The first tangential support sub surface 17a adjoins to the first wall section 19a through its front edge 22a, and the second tangential support sub surface 17b adjoins to the second wall section 19b through its rear edge 23b. Thus, the recessed first wall section 19a is located axially forwardly of the first tangential support sub surface 17a and the recessed second wall section 19b is located axially rearwardly of the second tangential support sub surface 17b, as seen in the axial direction of the tool body 2.

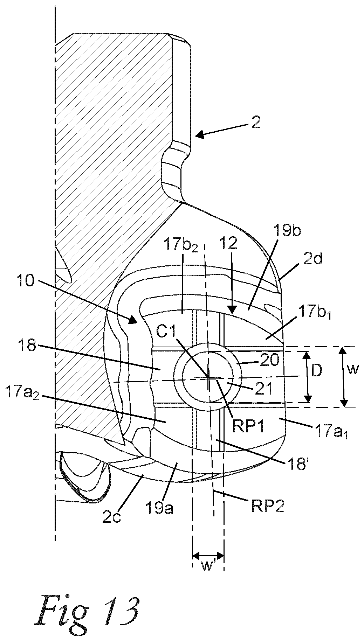

The bottom wall 12 of each insert seat 10 may also, in addition to the above-mentioned radial groove 18, be provided with an additional groove 18' that extends across the bottom wall 12 along the above-mentioned second reference plane RP2, as illustrated in Fig 13. This additional groove 18' extends in a substantially axial direction in the tool body 2 and is recessed in relation to the tangential support sub surfaces 17a₁, 17a₂, 17b₁, 17b₂ on the bottom wall 12 to prevent the abutment surface 45 of the cutting insert 30 that abuts against the tangential support sub surfaces 17a₁, 17a₂, 17b₁, 17b₂, when the cutting insert 30 is mounted in the insert seat 10 in any of its working positions, from making contact with the part of the bottom wall 12 covered by the additional groove 18'. Hereby, an area on said abutment surface 45 along the longitudinal plane LP will not be in contact with the tangential support sub surfaces 17a₁, 17a₂, 17b₁, 17b₂ when the cutting insert 30 has been mounted in the insert seat 10 in any of its working positions. The additional groove 18 preferably has such width w' that the shortest distance between the second reference plane RP2 and a tangential support sub surface 17a₁, 17a₂, 17b₁, 17b₂ on any side of the second reference plane RP2 is equal to or larger than D/4.

Also the additional groove 18' intersects the screw hole 20 in the bottom wall 12 of the insert seat 10. Furthermore, the radial groove 18 and the additional groove 18' intersect each other so as to form a cross-like pattern in the bottom wall 12 of the insert seat 10.

The width w' of the additional groove 18' is preferably no larger than 1.8×D in any position along the longitudinal extension of the additional groove 18'. Furthermore, the width w' of the additional groove 18' is preferably substantially constant along the longitudinal extension of the additional groove 18'. However, the additional groove 18' may as an alternative have a width w' that varies along the longitudinal extension of the additional groove 18'. In the embodiment illustrated in Fig 13, the width w' of the additional groove 18' is smaller than the width w of the radial grove 18.

The additional groove 18' has a depth of 0.03-2.0 mm, preferably 0.03-1.0 mm, more preferably 0.03-0.5 mm, and most preferably 0.03-0.2 mm, wherein the depth of the additional groove 18' is measured as the perpendicular distance between the deepest part of the additional groove 18' and the plane in which the tangential support sub surfaces 17a₁, 17a₂, 17b₁, 17b₂ extend.

In the embodiment illustrated in Fig 13, the tangential support sub surfaces 17a₁, 17a₂, 17b₁, 17b₂ of each insert seat 10 are four in number and consist of:
- two tangential support sub surfaces 17a₁, 17a₂ located on a first side of the radial groove 18 and on either side of the additional groove 18' such that one of them is located on a first side of the second reference plane RP2 and the other one is located on an opposite second side of the second reference plane RP2; and
- two tangential support sub surfaces 17b₁, 17b₂ located on a second side of the radial groove 18 and on either side of the additional groove 18' such that one of them is located on the first side of the second reference plane RP2 and the other one is located on the second side of the second reference plane RP2.

In the illustrated embodiment, the above-mentioned first group of cutting edges comprises two separate first sets of cutting edges, which correspond to a respective working position of the four available working positions of cutting insert 30. Each first set of cutting edges comprises:
- a primary cutting edge 51 formed at an intersection between the first major face 31 and one of the two minor side faces 37, 38;
- a secondary cutting edge 52 formed at an intersection between the first major face 31 and one of the two major side faces 35, 36;
- a first curved corner cutting edge 53 formed at an intersection between the first major face 31 and one of the four corner side faces 39-42; and
- a second curved corner cutting edge 54 formed at an intersection between the first major face 31 and another one of the four corner side faces 39-42.

The secondary cutting edge 52, the first curved corner cutting edge 53, the primary cutting edge 51 and the second curved corner cutting edge 54 of each one of the first sets of cutting edges are arranged one after the other, with the first curved corner cutting edge 53 located between the primary cutting edge 51 and the secondary cutting edge 52 and adjoining to the primary cutting edge 51 at a first end of the primary cutting edge 51, and with the second curved corner cutting edge 54 adjoining to the primary cutting edge 51 at a second end of the primary cutting edge 51.

In the illustrated embodiment, the above-mentioned second group of cutting edges comprises two separate second sets of cutting edges, which correspond to a respective working position of the four available working positions of cutting insert 30. Each second set of cutting edges comprises:
- a primary cutting edge 51 formed at an intersection between the second major face 32 and one of the two minor side faces 37, 38;
- a secondary cutting edge 52 formed at an intersection between the second major face 32 and one of the two major side faces 35, 36;
- a first curved corner cutting edge 53 formed at an intersection between the second major face 32 and one of the four corner side faces 39-42; and
- a second curved corner cutting edge 54 formed at an intersection between the second major face 32 and another one of the four corner side faces 39-42.

The secondary cutting edge 52, the first curved corner cutting edge 53, the primary cutting edge 51 and the second curved corner cutting edge 54 of each one of the second sets of cutting edges are arranged one after the other, with the first curved corner cutting edge 53 located between the primary cutting edge 51 and the secondary cutting edge 52 and adjoining to the primary cutting edge 51 at a first end of the primary cutting edge 51, and with the second curved corner cutting edge 54 adjoining to the primary cutting edge 51 at a second end of the primary cutting edge 51.

The abutment surface 45 on each one of the first and second major faces 31, 32 of the cutting insert 30 is preferably depressed in relation to at least a part of the periphery of the associated major face 31, 32. In the illustrated embodiment, the abutment surface 45 on each one of the two major faces 31, 32 of the cutting insert 30 is depressed in relation to the two primary cutting edges 51 provided along the periphery of the associated major face 31, 32 and also in relation to a part of each one of the first and second curved corner cutting edges 53, 54 provided along the periphery of the associated major face 31, 32. Thus, the abutment surface 45 on each one of the two major faces 31, 32 is located closer to the median plane MP than the two primary cutting edges 51 provided along the periphery of the associated major face. In the illustrated embodiment, inclined rake surfaces 43 are provided on each one of the first and second major faces 31, 32 between each one of the primary cutting edges 51 and the abutment surface 45.

In the illustrated embodiment, each primary cutting edge 51 is convexly curved and extends in a first circular arc between the two adjacent curved corner cutting edges 53, 54, as seen in a plan view of the cutting insert 30 along the centre axis C of the through hole 44 toward the associated major face 31, 32. In this case, each primary cutting edge 51 is also convexly curved and extends in a second circular arc between the two adjacent curved corner cutting edges 53, 54, as seen in a lateral view of the cutting insert 30 toward the associated minor side face 37, 38 and along the above-mentioned first reference axis A1. When the cutting insert 30 is mounted in the insert seat 10, one of the primary cutting edges 51 of the cutting insert 30 is positioned to form an active primary cutting edge in the milling tool, wherein this active primary cutting edge 51 has a first part 51a (see Fig 2) located between an axially foremost point 55 on this active primary cutting edge 51 and the adjacent first curved corner cutting edge 53 and a second part 51b located between said axially foremost point 55 and the adjacent second curved corner cutting edge 54. The second part 51b of the active primary cutting edge 51 has a position in the tool body 2 radially inwardly of the first part 51a of the active primary cutting edge 51 and is configured to operate as a ramping cutting edge. The first part 51a of the active primary cutting edge 51 has a position in the tool body 2 radially outwardly of the second part 51b of the active primary cutting edge 51 and is configured to operate as a main cutting edge.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A rotary cutting tool comprising:
- a tool body (2) having a front end (2a) and an opposite rear end (2b), the rear end (2b) being configured for attachment to a machine, wherein the tool body (2) has an axially forwardly facing front face (2c) at its front end (2a) and a peripheral surface (2d) that adjoins to the front face (2c) and extends from the front face (2c) towards the rear end (2b) of the tool body, the tool body (2) comprising at least one insert seat (10) provided in the tool body (2) at a transition between the front face (2c) and the peripheral surface (2d) of the tool body (2), wherein said at least one insert seat (10):
• comprises a space (11) configured to accommodate a double-sided indexable cutting insert (30), wherein this space (11) is open towards the front face (2c) of the tool body (2) in order to allow said cutting insert (30), when mounted in the insert seat (10), to project in the axial direction of the tool body (2) beyond the front end (2a) thereof and also open towards the peripheral surface (2d) of the tool body (2) in order to allow said cutting insert (30), when mounted in the insert seat (10), to project in the radial direction of the tool body (2) beyond the peripheral surface (2d) thereof,
• comprises a substantially tangentially facing bottom wall (12), and an internal wall (14) that extends transversely to the bottom wall (12) and delimits said space (11) together with the bottom wall (12) and that at a first end (14a) adjoins to the front face (2c) of the tool body (2) and at a second end (14b) adjoins to the peripheral surface (2d) of the tool body (2);
- a double-sided indexable cutting insert (30) with several different working positions releasably mountable in said at least one insert seat (10), wherein this cutting insert (30) comprises:
• two major faces (31, 32) arranged opposite to each other on opposite sides of the cutting insert (30), the two major faces (31, 32) being configured to serve as rake faces, one at a time, and to constitute leading and trailing faces of the cutting insert (30) when mounted in said at least one insert seat (10) and as seen in an intended direction of rotation (R) of the tool body (2), wherein the cutting insert (30) has a through hole (44) that extends centrally through the cutting insert (30) between the two major faces (31, 32) and a median plane (MP) that extends halfway between the two major faces (31, 32) perpendicularly to a centre axis (C) of the through hole (44), and wherein a peripheral surface (34) extends around the cutting insert (30) between the two major faces (31, 32),
• two major side faces (35, 36) included in the peripheral surface (34) and arranged opposite to each other on opposite sides of the cutting insert (30), wherein the cutting insert (30) has a longitudinal plane (LP) that extends halfway between the two major side faces (35, 36) perpendicularly to the median plane (MP) and that contains the centre axis (C) of the through hole (44),
• two minor side faces (37, 38) included in the peripheral surface (34) and arranged opposite to each other on opposite sides of the cutting insert (30), each one of the two minor side faces (37, 38) being arranged between the two major side faces (35, 36), wherein the cutting insert (30) has a central plane (CP) that extends across the cutting insert (30) perpendicularly to the median plane (MP) and perpendicularly to the longitudinal plane (LP) and that contains the centre axis (C) of the through hole (44), and wherein a length (L) of the cutting insert (30) as measured along a line of intersection between the median plane (MP) and the longitudinal plane (LP) is larger than a width (W) of the cutting insert (30) as measured along a line of intersection between the median plane (MP) and the central plane (CP), and
• four corner side faces (39-42) included in the peripheral surface (34) and arranged at a respective corner of the peripheral surface between a major side face (35, 36) and a minor side face (37 ,38),
wherein each one of the two major faces (31, 32) is provided with a substantially planar abutment surface (45) that is penetrated by the through hole (44), and wherein the cutting insert (30), when mounted in said at least one insert seat (10) in any of its working positions, is configured to abut against a radial support surface (16a, 16b) on the internal wall (14) in the insert seat through a surface on one of the two major side faces (35, 36), abut against an axial support surface (15) on the internal wall (14) in the insert seat through a surface on one of the two minor side faces (37, 38) and abut against a tangential support surface (17a, 17b; 17a₁, 17a₂, 17b₁, 17b₂) on the bottom wall (12) in the insert seat through the abutment surface (45) on one of the two major faces (31, 32) with the central plane (CP) of the cutting insert (30) coplanar with an imaginary first reference plane (RP1) that extends across the bottom wall (12) in the insert seat (10) and with the longitudinal plane (LP) of the cutting insert (30) coplanar with an imaginary second reference plane (RP2) that extends across the bottom wall (12) in the insert seat (10) perpendicularly to the first reference plane (RP1); and
- a fastening element (7) in the form of a screw associated with said cutting insert (30) and by means of which said cutting insert (30) may be releasably fixed to said at least one insert seat (10) in any of its working positions, wherein this fastening element (7) is configured to extend through the through hole (44) in said cutting insert (30) and to be in threaded engagement with an internally threaded part (21) of a screw hole (20) in the bottom wall (12) in said at least one insert seat (10),
**characterized in that** the tangential support surface on the bottom wall (12) of said at least one insert seat (10) is divided into two or more tangential support sub surfaces (17a, 17b; 17a₁, 17a₂, 17b₁, 17b₂) that are substantially coplanar with each other and located at a distance from each other, wherein:
- said two or more tangential support sub surfaces consist of one or more tangential support sub surfaces (17a; 17a₁, 17a₂) located on a first side of said first reference plane (RP1) and one or more tangential support sub surfaces (17b; 17b₁, 17b₂) located on an opposite second side of said first reference plane (RP1),
- said one or more tangential support sub surfaces (17a; 17a₁, 17a₂) on the first side of said first reference plane (RP1) are separated from said one or more tangential support sub surfaces (17b; 17b₁, 17b₂) on the second side of said first reference plane (RP1) by a groove (18) that is formed in the bottom wall (12) and extends across the bottom wall (12) along said first reference plane (RP1), this groove (18) being recessed in relation to the tangential support sub surfaces (17a, 17b; 17a₁, 17a₂, 17b₁, 17b₂) on the bottom wall (12) to prevent the abutment surface (45) of said cutting insert (30) that abuts against the tangential support sub surfaces (17a, 17b; 17a₁, 17a₂, 17b₁, 17b₂), when the cutting insert (30) is mounted in said at least one insert seat (10) in any of its working positions, from making contact with the part of the bottom wall (12) covered by the groove (18), and
- said groove (18) has such width that the shortest distance between said first reference plane (RP1) and a tangential support sub surface (17a, 17b; 17a₁, 17a₂, 17b₁, 17b₂) on any side of the first reference plane (RP1) is equal to or larger than D/4, where D is the major diameter of the internally threaded part (21) of the screw hole (20) in the bottom wall (12) in said at least one insert seat (10).

2. A rotary cutting tool according to claim 1, **characterized in that** the width (w) of said groove (18) is no larger than 1.8×D, preferably no larger than 1.5×D, in any position along the longitudinal extension of the groove (18).

3. A rotary cutting tool according to claim 1 or 2, **characterized in that** the width (w) of said groove (18) is substantially constant along the longitudinal extension of the groove (18).

4. A rotary cutting tool according to any of claims 1-3, **characterized in that** said groove (18) has substantially rectilinear longitudinal edges on either side of said first reference plane (RP1).

5. A rotary cutting tool according to any of claims 1-4, **characterized in that** said groove (18) has a depth (d) of 0.03-2.0 mm, preferably 0.03-1.0 mm, more preferably 0.03-0.5 mm, and most preferably 0.03-0.2 mm.

6. A rotary cutting tool according to any of claims 1-5, **characterized in:**
- **that** the bottom wall (12) comprises a first wall section (19a) and a second wall section (19b) that are recessed in relation to the tangential support sub surfaces (17a, 17b; 17a₁, 17a₂, 17b₁, 17b₂) on the bottom wall (12), wherein said first wall section (19a) extends across the bottom wall (12) at a first end of the bottom wall facing the front face (2c) of the tool body (2) and said second wall section (19b) extends across the bottom wall (12) at an opposite second end of the bottom wall;
- **that** each one of said one or more tangential support sub surfaces (17a; 17a₁, 17a₂) on the first side of said first reference plane (RP1) adjoins to said first wall section (19a); and
- **that** each one of said one or more tangential support sub surfaces (17b; 17b₁, 17b₂) on the second side of said first reference plane (RP1) adjoins to said second wall section (19b).

7. A rotary cutting tool according to any of claims 1-6, **characterized in:**
- **that** said two or more tangential support sub surfaces comprise two tangential support sub surfaces (17a₁, 17a₂) located on the first side of said first reference plane (RP1) and on either side of said second reference plane (RP2) such that one of them is located on a first side of the second reference plane (RP2) and the other one is located on an opposite second side of the second reference plane (RP2);
- **that** said two or more tangential support sub surfaces comprise two tangential support sub surfaces (17b₁, 17b₂) located on the second side of said first reference plane (RP1) and on either side of said second reference plane (RP2) such that one of them is located on the first side of the second reference plane (RP2) and the other one is located on the second side of the second reference plane (RP2); and
- **that** an additional groove (18') is formed in the bottom wall (12) and extends across the bottom wall (12) along said second reference plane (RP2), this additional groove (18') being recessed in relation to the tangential support sub surfaces (17a₁, 17a₂, 17b₁, 17b₂) on the bottom wall (12) to prevent the abutment surface (45) of said cutting insert (30) that abuts against the tangential support sub surfaces (17a₁, 17a₂, 17b₁, 17b₂), when the cutting insert (30) is mounted in said at least one insert seat (10) in any of its working positions, from making contact with the part of the bottom wall (12) covered by the additional groove (18'), wherein said two tangential support sub surfaces (17a₁, 17a₂) on the first side of the first reference plane (RP1) are separated from each other by the additional groove (18') and said two tangential support sub surfaces (17b₁, 17b₂) on the second side of the first reference plane (RP1) are separated from each other by the additional groove (18').

8. A rotary cutting tool according to claim 7, **characterized in that** said additional groove (18') has such width that the shortest distance between said second reference plane (RP2) and a tangential support sub surface (17a₁, 17a₂, 17b₁, 17b₂) on any side of the second reference plane (RP2) is equal to or larger than D/4.

9. A rotary cutting tool according to claim 8, **characterized in that** the width (w') of said additional groove (18') is no larger than 1.8×D in any position along the longitudinal extension of the additional groove (18').

10. A rotary cutting tool according to any of claims 1-9, **characterized in that** the radial support surface is divided into a first radial support sub surface (16a) and a second radial support sub surface (16b) located at a distance from each other as seen in the axial direction of the tool body (2).

11. A rotary cutting tool according to claim 10, **characterized in that** the first and second radial support sub surfaces (16a, 16b) are substantially coplanar with each other.

12. A rotary cutting tool according to any of claims 1-11, **characterized in that** the length (L) of said cutting insert (30) as measured along the line of intersection between the median plane (MP) and the longitudinal plane (LP) is at least 1.1 times larger than the width (W) of the cutting insert (30) as measured along the line of intersection between the median plane (MP) and the central plane (CP).

13. A rotary cutting tool according to any of claims 1-12, **characterized in that** the abutment surface (45) on each one of the two major faces (31, 32) of said cutting insert (30) is depressed in relation to at least a part of a periphery of the associated major face (31, 32).

14. A rotary cutting tool according to any of claims 1-13, **characterized in that** said cutting insert (30) is a cutting insert with four different working positions.

15. A rotary cutting tool according to any of claims 1-14, **characterized in that** the tool body (2) comprises two or more such insert seats (10) distributed in the circumferential direction of the tool body.

16. A rotary cutting tool according to any of claims 1-15, **characterized in that** the rotary cutting tool (1) is a milling tool.
